# DEMANDE DE BREVET EUROPEEN

(11) **EP 1 480 181 A1**
(43) Date de publication de la demande: **24.11.2004**
(21) Numéro de dépôt: 04101859.9
(22) Date de dépôt: 30.04.2004
(51) Int. Cl.: G08C 17/02, G08B 25/08, G08B 25/10

(54) **Procédé et dispositif de télécommande**

(30) Priorité: 19.05.2003 FR 0350159
(71) Demandeur: Societé Française du Radiotéléphone, 92915 Paris la Défense Cedex (FR)
(72) Inventeur: Leguillier, Stéphane, 92800 Puteaux (FR)
(74) Mandataire: Schmit, Christian Norbert Marie

(57) **Abrégé**

Pour rendre plus universelle la télécommande d'un transmetteur par un récepteur quelconque en relation avec ce transmetteur, on prévoit d'interposer entre eux un serveur de messages d'alarme. Le serveur de messages d'alarme peut aussi jouer par ailleurs un rôle de serveur de messages de commande. Le serveur de messages d'alarme interprète les messages d'alarme reçus du transmetteur et les transmet au récepteur en connaissance de l'aptitude de ce récepteur à les recevoir. On montre en agissant ainsi, qu'il suffit à un récepteur quelconque de se connecter au serveur de messages d'alarme, lors d'une première opération, de désigner selon une procédure préparée d'avance le transmetteur avec lequel il veut ensuite pouvoir être mis en relation et de pouvoir quel que soit sa classe être capable de commander le transmetteur. Le procédé de l'invention permet notamment de s'affranchir de l'obligation d'avoir à spécialiser la liaison transmetteur récepteur.

## Description

La présente invention a pour objet un procédé et un dispositif de télécommande. Elle a essentiellement pour but de faciliter l'utilisation des transmetteurs de messages d'alarme, message d'alarme étant entendu au sens général: celui de signaler opportunément, ou régulièrement, une information utile à un destinataire. L'opération de télécommande dont il est question comporte un message de commande en réponse au message d'alarme. Le message de commande est transmis par le récepteur à destination du transmetteur, ou de périphériques connectés à ce transmetteur, pour que celui-ci exécute une ou des actions correspondant au message de commande.

Dans le domaine de la télésurveillance, on connaît ainsi des dispositifs dans lesquels un automate transmetteur transmet à un récepteur, selon un protocole propriétaire, des informations à ce récepteur. Par exemple, notamment dans le domaine de la protection des locaux, un transmetteur peut comporter un détecteur anti-intrusion et l'émission, vers le récepteur, d'un message d'alarme. Le message d'alarme peut comporter une image détectée par une caméra du transmetteur et destinée au récepteur. Un exemple de ce type est par exemple décrit dans le document FR-A-2 817 989. Dans ce document, il est par ailleurs prévu une télécommande du transmetteur pour lui faire transmettre en retour au récepteur d'autres images et ou des sons relatifs à l'alarme détectée.

Dans un autre domaine, on connaît des systèmes de télécommande comportant, notamment par envoi selon des canaux spécifiques de transmission, de signaux d'alarme et de commande entre un transmetteur et un récepteur. Ces canaux peuvent comporter des transmissions selon la norme BLUE-TOOTH, et ou l'envoi d'images ou de messages en télécommunication mobile selon le protocole MMS.

Quelles que soient les solutions retenues, ces opérations de télécommande nécessitent, dans le récepteur notamment, une spécialisation pour pouvoir comprendre les messages qui lui sont envoyés par le transmetteur et pour pouvoir commander ce dernier en retour. Notamment, un système d'exploitation du récepteur, en particulier lorsqu'il comporte un téléphone mobile, doit comporter des sous-programmes permettant de traduire d'une manière compréhensible pour l'utilisateur du récepteur les messages codés qui lui sont transmis par le transmetteur. En pratique, il n'est par exemple pas envisageable de dérouter vers un autre récepteur quelconque (par exemple un autre téléphone fixe ou mobile) les messages d'alarme émis par le transmetteur. Le récepteur quelconque serait incapable de les comprendre et bien entendu ne mettrait pas l'utilisateur du récepteur en position de les exploiter. En définitive, le caractère quelconque du récepteur est un frein à l'utilisation d'un tel système de télécommande. Il faut qu'il soit spécialisé.

Le but de l'invention est de permettre l'utilisation du système de télécommande avec un récepteur quelconque, en particulier un récepteur qui serait différent à une époque ultérieure, quelles que soient les évolutions et les modifications apportées à ce dit récepteur.

Une solution pour remédier à ce problème consisterait à réaliser un transmetteur de type universel susceptible d'émettre des messages adaptés à n'importe quel récepteur. Cependant, outre le fait qu'une telle disposition rendrait le transmetteur particulièrement compliqué (et cher), il serait mal adapté à l'existence de nouvelles générations de récepteurs qui n'auraient pas été prévus dans le transmetteur.

Dans l'invention on prévoit de remédier à cet inconvénient en interposant dans la chaîne de télécommande, entre le transmetteur et le récepteur, un serveur de messages d'alarme. Ce serveur de messages d'alarme reçoit les messages d'alarme et les interprète en fonction des caractéristiques du récepteur, avant d'envoyer ces messages d'alarme interprétés au récepteur. Dans ce but le serveur de messages d'alarme comporte une base de données, notamment des tables dans lesquelles sont indiquées, entre autres, d'une part une identité de transmetteur et d'autre part une identité de récepteur, appariés par le serveur de messages d'alarme.

On montrera par ailleurs que, selon l'invention, il est possible de prévoir en retour une interprétation de messages de commande au cas où le récepteur voudrait télécommander le transmetteur spontanément. En définitive, l'interprétation du message d'alarme comporte l'incorporation dans ce message d'indications relatives à des instructions exécutables par le transmetteur, et que le récepteur peut simplement sélectionner, charge alors pour le serveur de messages d'alarme de se transformer ensuite en serveur de messages de commande pour émettre à destination du transmetteur des instructions correspondant aux commandes sélectionnées. En agissant ainsi on rend l'installation particulièrement efficace et universelle.

Dans les deux cas, le transmetteur et le récepteur ne connaissent comme adresse de destination que le serveur de messages d'alarme, respectivement le serveur de messages de commande. Ce serveur, lui, réalise l'indirection, c'est-à-dire la transmission ultime à un (ou plusieurs) destinataire(s) qui lui a (ont) préalablement été indiqué(s) ou déclaré(s) pour celui qui l'appelle.

Une application possible de cette installation est le montage du transmetteur (qui comporterait alors un terminal mobile) dans un véhicule automobile, avec comme détecteur d'alarme un détecteur anti-intrusion associé à une caméra qui pointe vers le conducteur du véhicule. Le message d'alarme peut ensuite être transmis, via le serveur de messages d'alarme de l'invention, vers n'importe quel récepteur, pourvu de préférence d'un écran et au moins de moyens de sélection. Un utilisateur de ce récepteur peut alors sélectionner, parmi des commandes possibles, notamment une commande permettant d'arrêter le véhicule, éventuellement après l'émission d'un message d'avertissement à destination du conducteur du véhicule lui signalant que ce dernier va être arrêté. La sélection, par le récepteur, de l'une quelconque des options possibles provoque l'émission, par ce récepteur à destination du serveur de messages de commande, puis par le serveur de messages de commande à destination du transmetteur, d'une commande destinée au transmetteur. Un périphérique de ce transmetteur peut alors couper le fonctionnement du moteur du véhicule automobile.

Dans la suite de cette description, on appellera transmetteur le dispositif éditant et émettant le message d'alarme, on appellera récepteur le dispositif destinataire ultime de ce message d'alarme, on appellera serveur de messages d'alarme un dispositif de traitement interposé sur la voie descendante, du transmetteur au récepteur, et on appellera serveur de messages de commande un dispositif de traitement interposé sur la voie montante, du récepteur au transmetteur. Le récepteur est un appareil normalement à disposition d'un opérateur humain. Toutefois, il peut être un dispositif programmé pour produire automatiquement des ordres en réponse à des alarmes attendues qu'il reçoit.

L'invention a donc pour objet un procédé de télécommande dans lequel :
- un transmetteur émet, via un réseau de télécommunications, en direction d'un récepteur, un message d'alarme
- le récepteur émet en retour en direction du transmetteur un message de commande,
- le transmetteur exécute une action correspondant à une commande contenue dans le message de commande,
caractérisé en ce qu'il comporte les étapes suivantes
- un serveur de messages d'alarme reçoit le message d'alarme,
- le serveur de messages d'alarme interprète le message d'alarme en fonction de caractéristiques du récepteur et produit un message d'alarme interprété, et
- le serveur de messages d'alarme transmet au récepteur le message d'alarme interprété.
   L'invention a également pour objet un procédé de télécommande dans lequel
- un transmetteur émet, via un réseau de télécommunications, en direction d'un récepteur un message d'alarme
- le récepteur émet en retour en direction du transmetteur un message de commande,
- le transmetteur exécute une action correspondant à une commande contenue dans le message de commande,
caractérisé en ce qu'il comporte les étapes suivantes
- un serveur de messages de commande reçoit le message de commande,
- le serveur de messages de commande interprète le message de commande en fonction de caractéristique du transmetteur et produit un message de commande interprété, et
- le serveur de messages de commande transmet au récepteur le message de commande interprété.

L'invention a également pour objet un dispositif de télécommande comportant un transmetteur muni de moyens pour émettre, via un réseau de télécommunications, en direction d'un récepteur un message d'alarme, un récepteur pour recevoir ce message d'alarme et pour émettre en retour en direction du transmetteur un message de commande, le transmetteur étant en outre muni de moyens pour exécuter une action correspondant à une commande contenue dans le message de commande, caractérisé en ce qu'il comporte un serveur de messages d'alarme interposé pour recevoir le message d'alarme, pour interpréter le message d'alarme en fonction de caractéristiques du récepteur, pour produire un message d'alarme interprété, et pour transmettre au récepteur le message d'alarme interprété.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : Une représentation schématique du procédé et du dispositif de télécommande de l'invention ;
- Figures 2a et 2b : Des représentations schématiques de messages interprétés d'alarmes et de télécommandes émis par respectivement un serveur de messages d'alarme et un serveur de messages de commande de l'invention.

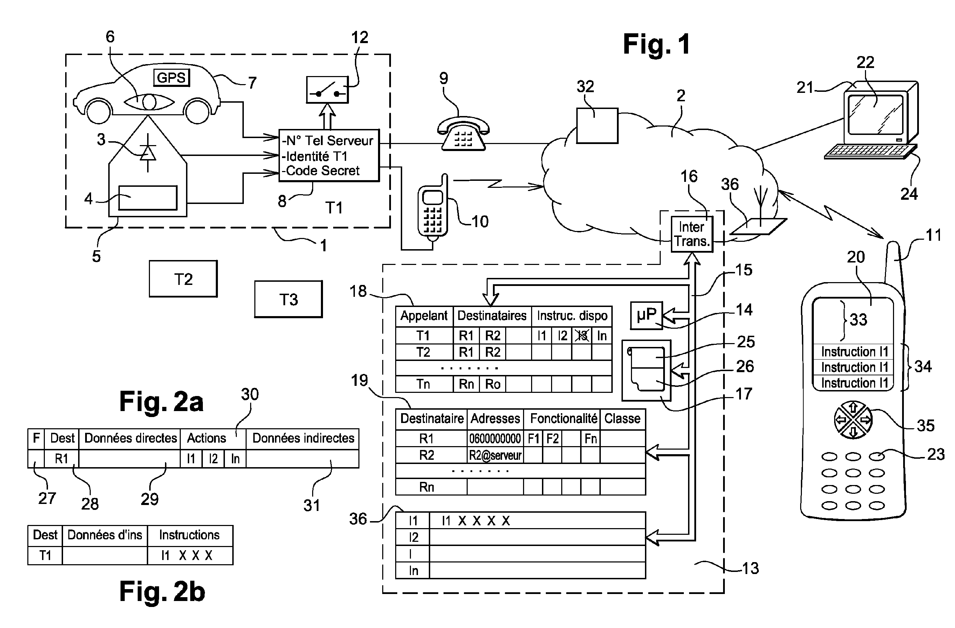

La figure 1 montre un ensemble de moyens utilisables pour mettre en oeuvre le procédé de télécommande de l'invention. Ces moyens comportent un transmetteur 1 qui émet, via un réseau de télécommunication 2 un message d'alarme. Le transmetteur 1 peut comporter un détecteur d'alarme 3 de type infrarouge, de type détecteur de température, ou de tout autre type de détection 4, tel qu'un radar à effet Doppler. D'une manière générale, ces détecteurs d'alarme servent à mesurer l'évolution d'un paramètre physique, et à éditer un signal dès que ce paramètre physique, en valeur, dépasse un seuil. Les détecteurs 3 et 4 sont principalement destinés à être installés dans un édifice 5 privé ou public.

Dans un autre domaine d'utilisation, un détecteur anti-intrusion du type du détecteur 4 est associé à une caméra 6, le tout étant monté dans un véhicule 7, dans le but de prévenir le vol.

Les détecteurs 3, 4 et 6 émettent des signaux de détection. Ils sont reliés à des circuits de transmission 8 en relation avec le réseau de télécommunication 2. Les circuits de transmission 8 peuvent être incorporés ou être reliés à des installations de télécommunication, de téléphonie, fixes 9 ou mobiles 10 . Dans le cas où les circuits 8 de transmission sont reliés à une installation de télécommunication fixe 9, les circuits 8 de transmission comportent notamment un modem. Dans le cas où un terminal 10 mobile est utilisé, une voie de transmission de données d'un protocole de téléphonie mobile est utilisée de préférence.

Dans l'état de la technique, pour les équipements spécialisés de type connu, le transmetteur 1, ou bien les terminaux 9 et 10 comportent une désignation de l'adresse d'un récepteur, en pratique du numéro de téléphone voire d'une adresse internet de ce récepteur, et des moyens pour établir une communication avec ce récepteur.

Dans l'état de la technique, un récepteur 11 est lui aussi connecté au réseau de télécommunications 2. Il reçoit d'une manière connue les messages émis par les terminaux 8, 9 et 10. Ce récepteur 11 peut envoyer, en correspondance d'un message reçu, un ordre au transmetteur 1 de façon à ce que celui-ci produise une action, par exemple une mise en service d'un interrupteur 12 permettant de stopper le fonctionnement (ou couper l'alimentation) du moteur du véhicule 7. On comprend que de tels systèmes fonctionnent bien si le transmetteur 1 et le récepteur 11 sont tout à fait spécialisés et aptes à communiquer l'un avec l'autre.

Dans l'invention, pour permettre à n'importe quel transmetteur 1, appelé T1, de converser avec n'importe quel type de récepteur 11, appelé R1, on prévoit que, plutôt que d'appeler le récepteur 11, le transmetteur 1 appelle un serveur 13 d'interprétation de messages d'alarme. Sur le plan pratique le serveur 13 comporte un système de traitement de l'information. Ce système de traitement de l'information du serveur 13 comporte un processeur 14 relié par un bus 15 à une interface de transmission 16 avec le réseau de télécommunication 2, à une mémoire programme 17, et à une mémoire de données comportant au moins un certain nombre de tables spécifiques à l'invention.

Parmi ces tables spécifiques de la mémoire de données, une première table 18 permet de mémoriser une correspondance entre un transmetteur 1 appelant, référencé par son identité T1, et un récepteur 11 appelé, référencé ici par son identité R1. Il est toutefois possible, si le récepteur R1 est indisponible ou injoignable qu'un autre récepteur R2 puisse être joint en secours, en remplacement, ou en complément du récepteur R1. Dans ce cas, dans la table 18, dans l'enregistrement en regard de l'identité T1, se trouve la liste des récepteurs destinataires susceptibles de recevoir les messages d'alarme provenant du transmetteur 1 d'identité T1.

La table 18 comporte de préférence en outre, dans chaque enregistrement, une liste d'instructions disponibles. Ces instructions disponibles I1, I2, ... ln sont celles qu'est susceptible de lancer le transmetteur T1 si on le télécommande. Ces instructions sont par exemple de couper le fonctionnement d'un moteur voire, dans l'édifice 5, de déclencher le fonctionnement d'un extincteur particulier, ou la fermeture de portes coupe-feu télécommandables et ainsi de suite. En définitive, les instructions exécutables par le transmetteur 1 peuvent être aussi variées et aussi spécialisées que souhaité. On montrera ci-après que n'importe quel récepteur 11 sera susceptible de les faire exécuter à la demande.

Le serveur 13 comporte par ailleurs une table 19 de la mémoire de données dans laquelle des enregistrements permettent de mettre en correspondance des destinataires, par exemple R1, des lieux où des moyens par lesquels peuvent être joints ces destinataires (mémorisés dans un champ noté HLR, en référence aux bases de données de localisation de téléphonie mobile), ainsi que les fonctionnalités et, plus généralement, la classe des appareils récepteurs destinataires. En définitive l'adressage indirect du récepteur 11 se réalise par l'enregistrement dans la table 19, en regard d'une identité R1 d'un récepteur 11, d'un moyen de transmettre le message d'alarme à ce récepteur.

Par exemple, si le récepteur 11 est un téléphone mobile, le moyen de le joindre comportera seulement la désignation du numéro de téléphone auquel on peut joindre ce téléphone mobile. Cette désignation est associée d'une manière automatique à une session de composition de ce numéro par le serveur 13 pour lui faire envoyer le message d'alarme à transmettre. Par contre, si le récepteur, par exemple le récepteur R2, est un récepteur de type boîte aux lettres, le message d'alarme sera transféré en un message incorporé dans un courrier électronique envoyé à une adresse électronique prévue d'avance, ici figurativement désignée par R2@serveur. Dans cette adresse, R2 désigne l'identité du récepteur à joindre et "serveur" désigne l'adresse d'un site, notamment de type Internet, où le message peut être mémorisé, jusqu'à sa consultation. Le message d'alarme mémorisé est ainsi un message interprété. On verra plus loin comment il l'est plus encore.

Dans les mêmes enregistrements, en regard de chaque destinataire Ri seront mémorisées les différentes fonctionnalités des récepteurs. Par exemple une fonctionnalité F1 correspond à une aptitude du récepteur 11 à recevoir des courriers électroniques, des e-mails. Par exemple une fonction F2 correspond à une aptitude du récepteur 11 à recevoir des messages au protocole MMS. Par exemple une fonctionnalité F3 concernera le fait que le récepteur 11 est muni d'une carte à puce de type SIM TOOL-KIT. Ou encore une fonctionnalité F4 montrera l'aptitude du récepteur 11 à se connecter à Internet selon un protocole donné, par exemple le protocole WAP. Ou encore, une fonctionnalité F5 renseignera sur l'aptitude du récepteur 11 à télécharger des applications de type JAVA. Plus concrètement, une fonctionnalité F6 concernera la taille ou un format d'un écran 20 du récepteur 11, de manière à ce que des images puissent lui être transmises dans un format adapté à son utilisation. En pratique, le serveur 13 utilise ces fonctionnalités pour interpréter le message d'alarme, pour le formater dans un format compréhensible par le récepteur 11 quelconque.

Le renseignement de la table 18 peut comporter, lors de l'installation du transmetteur 1, l'envoi d'un message de mise en service par lequel le transmetteur 1 informe le serveur 13 de toutes ses caractéristiques, notamment des instructions disponibles 11 à In, qu'il est capable d'exécuter. De préférence, il informe le serveur 13 d'un code secret autorisant de futurs rattachements aux divers récepteurs. Le renseignement de la table 19 peut de la même façon être automatique. Lors d'une mise en service par une connexion d'un type particulier du récepteur 11 quelconque ou d'un récepteur 21 quelconque au serveur 13, ces récepteurs lui transmettent notamment leur classe, leur identité, leur numéro IMSI s'il s'agit d'un récepteur mobile, et toutes les informations les concernant notamment les moyens de les joindre : numéro de téléphone, adresse de messagerie électronique ou autre, et leur fonctionnalité. Par classe, on entend toute information permettant à un serveur de connaître un type de récepteur (ou de transmetteur dans le cas d'un serveur de messages de commande) et de retrouver dans une table dont il dispose, en regard de cette information de classe, tous les paramètres permettant d'interpréter correctement un message.

En ce qui concerne la correspondance dans un enregistrement de la table 18 entre le transmetteur T1 et un destinataire R1 donné, celle-ci peut être facilement réalisée, au moment du remplissage de l'enregistrement R1 de la table 19. Dans ce but le serveur 13 lance, par l'intermédiaire du réseau de télécommunications 2, une interrogation à destination du récepteur 11 ou du récepteur 21 qui se connecte. Cette interrogation sert à lui demander d'identifier le transmetteur T1 avec lequel R1 veut être apparié. On remarquera que cette interrogation est rendue simple puisque, lors de la connexion préalable de R1, celui-ci a communiqué sa classe au serveur 13. Ce serveur 13 est donc bien capable d'envoyer à R1 un message que R1 pourra comprendre. Le message envoyé en l'espèce concerne la désignation, en pratique l'identité, du transmetteur T1 auquel il doit être apparié.

Ainsi apparaît sur l'écran 20 du récepteur 11, ou sur l'écran 22 du récepteur 21, une invitation à composer avec les claviers 23 ou 24 respectivement de ces appareils une information relative à l'identité du transmetteur T1 auquel ils veulent être appariés. Au besoin cet appariement peut être complété ou sécurisé, par l'émission de codes secrets, connus dans l'enregistrement 18 correspondant. Ces codes secrets sont composés par ailleurs avec les claviers 23 ou 24. Le cas échéant, les codes secrets auront été communiqués au serveur 13 par le transmetteur 1 lors de son installation.

En cas de concordance, les indications de destinataires R1 correspondantes sont placées dans la table 18 de la mémoire en regard de l'identité T1 du transmetteur concerné.

En pratique les circuits 8 de transmission peuvent comporter en sus du numéro de téléphone du serveur 13 auquel ils doivent se connecter les indications relatives à leur identité T1 et au code secret utilisable lors de l'appariement avec eux. On notera que cet appariement est lui-même une opération accessible à la portée de n'importe quel récepteur 11 ou 21 puisqu'en définitive le serveur 13 fait tout le travail, et se contente à titre de réponse du message composé par l'utilisateur sur les claviers 23 et 24.

Le fonctionnement du serveur 13 selon l'invention peut être opéré de deux manières, de préférence des deux manières suivantes. Dans une première manière, la mémoire programme 17 comporte un sous-programme 25 utilisé pour recevoir du transmetteur 1 le message d'alarme, pour l'interpréter et le transmettre au récepteur 11. La mémoire 17 peut également comporter un sous-programme 26 pour télécommander le transmetteur 1 à partir du récepteur 11, d'une manière spontanée, ou en réponse à la réception d'un message d'alarme provenant du transmetteur 1.

Pour le sous-programme 25, lors de la réception dans l'interface de transmission 16 d'un message d'alarme en provenance du transmetteur 1, le sous-programme 25 compose un message d'alarme interprété, visible figure 2a. Ce message interprété comporte plusieurs types d'informations. Ce message interprété comporte en premier une indication, 27, en zone F, de format, précisant le format dans lequel le message interprété va être composé. En fait, l'indication de format n'est pas nécessairement incorporée dans le message interprété. Elle en conditionne au moins la syntaxe. Par exemple, le format peut être un format de type données, ou un format de type MMS, ou SMS ou un format de type courrier électronique. Ce format est déterminé en fonction d'une fonctionnalité, d'une classe, voire d'une préférence mentionnée par le récepteur 11 d'identité R1 lors de sa connexion au serveur 13. Cette indication de format est complétée bien entendu par une adresse 28, celle à laquelle le récepteur 11 destinataire peut être joint. Cette adresse de R1 est celle figurant dans l'enregistrement correspondant de la table 19. Cet enregistrement, d'adresse R1, est lui-même sélectionné car il correspond, pour le transmetteur T1 qui appelle, au destinataire possible. Le transmetteur qui appelle émet un signal d'alarme indiquant toujours à cet effet son identité dans son message d'alarme.

Puis le message d'alarme interprété comporte des données directes 29 comportant typiquement des informations reçues du transmetteur 1, éventuellement mises en forme pour convenir au récepteur 11, notamment à sa taille d'écran. Puis le message d'alarme interprété comporte dans un champ 30 une liste d'actions I1, I2, In exécutables par le transmetteur 1 en réponse à une commande à recevoir du récepteur 11. En pratique les actions I1, I2 et In sont remplacées par leur référence, leur identité. Celles-ci sont de fait des libellés qui rendent leur compréhension facile par l'utilisateur du récepteur 11 ou 21. Eventuellement, le message d'alarme interprété peut comporter des champs 31 relatifs à des données indirectes, notamment à des adresses de sites (en particulier Internet) où peuvent avoir été stockées les images saisies par la caméra 6, ou d'autres informations. De préférence, ces données indirectes sont présentées au récepteur R1 de telle façon que leur sélection par le terminal 11 entraîne immédiatement une connexion au site de stockage concerné. Eventuellement, d'autres informations peuvent être accessibles dans ces données indirectes, l'adresse des pompiers, celle de la police, celle d'une société de gardiennage et ainsi de suite. Ces données indirectes sont stockées notamment dans un serveur 32 relié au réseau 2 et situé dans ce réseau à l'adresse mentionné en 31.

Connaissant le type du récepteur 11, par renseignement préalable de sa classe dans l'enregistrement de la table 19, le serveur 13 est capable de formater le message d'alarme interprété pour que celui-ci s'affiche sur l'écran 20 (ou l'écran 22) avec une première zone d'information 33 située par exemple en haut de l'écran, et une deuxième zone de télécommande 34 située par exemple en bas de l'écran. Une variante vocale est aussi envisageable, les informations étant délivrées vocalement avant un énoncé et une offre de sélection par touche DTMF avec le clavier 23 des actions à choisir. La zone 33 permet d'afficher toutes les données directes de la zone 29 du message d'alarme interprété. La zone 34 peut comporter des informations relatives aux libellés, aux références, ou aux identités des instructions I1, I2 ou In exécutables par le transmetteur 1. Au moyen d'un bouton navigateur 35, un utilisateur qui regarde l'écran 20 peut alors sélectionner une des instructions de la zone 34 et valider son envoi en retour au serveur 13. Celui-ci transmet alors des commandes correspondantes au transmetteur T1.

En pratique une table 36 de la mémoire de données du serveur 13 peut comporter des enregistrements mettant en correspondance des références d'instruction, li, avec un message d'instruction proprement dit. Par exemple le message de l'instruction d'identité I1 sera I1XXXX. Le message d'instructions I1XXXX peut être le code instruction directement exécutable dans le transmetteur 1, en correspondance avec l'instruction d'identité I1. En variante, I1XXXX sera une référence de pointage pour que le transmetteur 1 exécute une instruction correspondant à cette référence. Dans ce cas ce dernier comportera un système de traitement du type de celui du serveur 13. Dans ce cas, au moment de la sélection par le récepteur 11 du libellé d'instruction I1, le processeur 14 sélectionne dans la mémoire 36 à l'identité I1 d'instruction, le message d'instruction I1XXXX. Le serveur 13 compose alors un message de commande interprété, montré figure 2b comportant fondamentalement une désignation d'un destinataire, ici le transmetteur T1 et le message d'instruction directement exécutable par le transmetteur T1. Le message de commande, ainsi interprété lui aussi, comporte l'adresse du destinataire, l'identité d'instruction et de préférence des données d'instructions permettant de paramétrer l'instruction exécutable.

On notera que l'identité du destinataire T1 du message de commande peut soit être incorporée au message d'alarme transmis au récepteur par le 11, soit être conservé d'une manière implicite dans le serveur 13 après envoi du message d'alarme, en attendant de recevoir un message de commande correspondant. Dans ce denier cas, le message d'alarme comportera en lui-même un numéro d'identification. Ce numéro d'identification est émis par le serveur 13, reçu par le récepteur 11, incorporé par le serveur 13 dans l'identité d'instruction en zone 30 affichable en zone 34, et réémis par ce récepteur 11 de manière à permettre la sélection de destination sans équivoque de l'instruction concernée au bon transmetteur T1.

Eventuellement, dans la zone 33 du récepteur 11 est montrée une désignation du transmetteur T1 qui l'appelle. En effet, comme montré sur les deux premiers enregistrements de la table 18, un récepteur d'identité R2 peut être mis en relation avec plusieurs transmetteurs différents, par exemple le transmetteur T1 ou le transmetteur T2. Dans ce cas, l'identité T1 ou T2 correspondante est incorporée par le serveur 13 dans les données directes.

Après interprétation, bien entendu chacun des messages d'alarme et ou de commande est transmis, dans la forme interprétée à un destinataire par exemple par l'intermédiaire d'une station de base 36 du réseau 2. De ce point de vue, le sous-programme 26 est du même type que le sous-programme 25. Il sert pour des transmissions de télécommande tout simplement.

La présente description des tables est un peu limitative pour ce qui est de l'évolution des caractéristiques qu'elle permet. En variante, on peut proposer un ensemble de tables chacune spécifique, par exemple une table de transmetteurs et une table de récepteurs, indépendantes l'une de l'autre, qui pourraient évoluer (ou être complétées) dans le temps (types, caractéristiques), et dans ce cas il existerait une table ou un dispositif (d'interrelation) les mettant simplement en relation l'une avec l'autre. L'intérêt est que le système n'est pas figé relativement aux transmetteurs ou aux récepteurs ou à leurs caractéristiques à un moment donné.

On notera que les transmissions de télécommande peuvent être spontanées. Par exemple elles peuvent être régulièrement sollicitées par le serveur 13, sans que celui-ci ait été préalablement alerté par le transmetteur 1. En variante, le récepteur 11 possède une commande pour interroger le serveur 13 pour que celui-ci initiasse la communication avec lui.

En variante le terminal mobile 10 ou le véhicule comporte des circuits de type GPS pour éditer et transmettre au serveur 13 une indication de localisation d'un endroit où se trouve ce terminal pour ce véhicule.

En fonction de la classe et ou de la spécialisation du récepteur 11, le message de commande émis par ce récepteur 11 peut comporter des données d'instruction permettant de paramétrer l'instruction à envoyer au transmetteur 1. Au besoin, il est prévu, lorsqu'une instruction 11 est sélectionnée de faire interroger à nouveau le récepteur 11 par le serveur 13 pour lui proposer, pour l'instruction 11, ainsi retenue plusieurs valeurs possibles d'application.

L'interprétation effectuée par les serveurs est une interprétation effectuée en fonction du destinataire du message, le récepteur pour un message d'alarme ou le transmetteur pour un message de commande. Cette interprétation est bien entendu aussi effectuée, au besoin, en fonction de l'émetteur du message, le transmetteur ou le récepteur respectivement, pour que le serveur le comprenne parfaitement. Cette interprétation de réception par le serveur peut être effectuée en raison de la réception d'une information de l'identité de l'appelant, voire la réception d'une information de type contenue dans le message provenant de cet appelant.

Il est bien évident que l'exploitation de l'invention ne doit pas se limiter aux quelques applications mentionnées ci-dessus. Ainsi, elle pourrait être aussi avantageusement exploitée lors de la sélection de pannes de tout type, par exemple panne d'un ascenseur, ou lors de la détection d'accidents ou d'incidents sur un tronçon d'autoroute, ou encore pour permettre d'assurer une surveillance médicale effective à domicile, etc.

## Revendications

1. Procédé de télécommande dans lequel :
- un transmetteur (1) émet, via un réseau (2) de télécommunications, en direction d'un récepteur (11) un message d'alarme
- le récepteur émet en retour en direction du transmetteur un message de commande,
- le transmetteur exécute une action (12) correspondant à une commande contenue dans le message de commande,
**caractérisé en ce qu'**il comporte les étapes suivantes
- un serveur (13) de message d'alarme reçoit le message d'alarme,
- le serveur de messages d'alarme interprète (25) le message d'alarme en fonction de caractéristiques du récepteur et produit un message d'alarme interprété, et
- le serveur de messages d'alarme transmet au récepteur le message d'alarme interprété.

2. Procédé de télécommande dans lequel
- un transmetteur (1) émet, via un réseau (2) de télécommunications, en direction d'un récepteur (11) un message d'alarme
- le récepteur émet en retour en direction du transmetteur un message de commande,
- le transmetteur exécute une action (12) correspondant à une commande contenue dans le message de commande,
**caractérisé en ce qu'**il comporte les étapes suivantes
- un serveur (13) de messages de commande reçoit le message de commande,
- le serveur de messages de commande interprète (26) le message de commande en fonction de caractéristique du transmetteur et produit un message de commande interprété, et
- le serveur de messages de commande transmet au récepteur le message de commande interprété.

3. Procédé selon la revendication 1 et la revendication 2.

4. Procédé selon l'une des revendications 1 ou 3, **caractérisé en ce que** dans le message d'alarme interprété, le serveur de messages d'alarme incorpore, dans des champs, des indications (I1, I2, In) d'instructions exécutables par le transmetteur après sélection par le récepteur.

5. Procédé selon l'une des revendications 1 ou 3 à 4, **caractérisé en ce que** dans le message d'alarme interprété, le serveur de messages d'alarme incorpore, dans un champ, une adresse d'un site (32) connecté à un réseau de télécommunication,
- une image est mémorisée dans ce site,
- cette image est visualisée par le récepteur qui va la chercher à cette adresse après avoir reçu le message d'alarme interprété.

6. Procédé selon l'une des revendications 1 ou 3 à 5, **caractérisé en ce que**
- le transmetteur confirme une exécution effective de la commande.

7. Procédé selon l'une des revendications 1 ou 3 à 6, **caractérisé en ce que**
- le serveur de messages d'alarme produit un message d'alarme interprété en fonction de caractéristiques du transmetteur.

8. Procédé selon l'une des revendications 2 à 7, **caractérisé en ce que**
- le serveur de messages de commande produit un message de commande interprété en fonction de caractéristiques du récepteur.

9. Dispositif de télécommande comportant un transmetteur (1) muni de moyens pour émettre, via un réseau (2) de télécommunications, en direction d'un récepteur (11) un message d'alarme, un récepteur (11) pour recevoir ce message d'alarme et pour émettre en retour en direction du transmetteur un message de commande, le transmetteur étant en outre muni de moyens (12) pour exécuter une action correspondant à une commande contenue dans le message de commande, **caractérisé en ce qu'**il comporte un serveur (13) de messages d'alarme interposé pour recevoir le message d'alarme, pour interpréter (25) le message d'alarme en fonction de caractéristiques du récepteur, pour produire un message d'alarme interprété, et pour transmettre au récepteur le message d'alarme interprété.

10. Dispositif de télécommande comportant un transmetteur (1) muni de moyens pour émettre, via un réseau (2) de télécommunications, en direction d'un récepteur (11) un message d'alarme, un récepteur (11) pour recevoir ce message d'alarme et pour émettre en retour en direction du transmetteur un message de commande, le transmetteur étant en outre muni de moyens (12) pour exécuter une action correspondant à une commande contenue dans le message de commande, **caractérisé en ce qu'**il comporte un serveur (13) de messages de commande interposé pour recevoir le message de commande, pour interpréter (26) le message de commande en fonction de caractéristiques du transmetteur, pour produire un message de commande interprété, et pour transmettre au transmetteur le message de commande interprété.

11. Dispositif selon l'une des revendications 9 à 10, **caractérisé en ce que** le serveur comporte un système de traitement de l'information avec une mémoire (17) programme et une mémoire (18, 19, 36) de données, la mémoire de données comportant
- une table (18) pour mémoriser des correspondances entre des références (T1) de transmetteur et des références (R1) de récepteurs, et ou
- une table (19) pour mémoriser des correspondances entre des références (T1) de transmetteur et des références (11) d'instructions exécutables par ce transmetteur, et ou
- une table (19) pour mémoriser des correspondances entre des références (R1) de récepteurs et des adresses (HLR) dans un réseau de télécommunication pour joindre ces récepteurs, et ou
- une table (19) pour mémoriser des correspondances entre des références (R1) de récepteurs et des aptitudes (F1) ou des classes de ces récepteurs.

12. Dispositif selon l'une des revendications 9 à 11, **caractérisé en ce qu'**il comporte un serveur (32) d'images pour télécharger une image dans le récepteur après réception du message d'alarme interprété par ce récepteur.

13. Dispositif selon l'une des revendications 9 à 12, **caractérisé en ce que** le récepteur comporte un terminal mobile (11).

14. Dispositif selon l'une des revendications 9 à 13, **caractérisé en ce que** le transmetteur comporte un terminal (10) mobile installé dans un véhicule automobile, ce terminal mobile étant muni de moyens (12) d'arrêter le véhicule, et de préférence d'une caméra (6).

15. Dispositif selon la revendication 14, **caractérisé en ce que** le transmetteur comporte un circuit de type GPS pour incorporer dans le message d'alarme une indication de position du véhicule.
